# FASCICULE DE BREVET EUROPEEN

(11) **EP 0 349 405 B1**
(45) Date de publication et mention de la délivrance du brevet: **29.09.1993**
(21) Numéro de dépôt: 89401806.8
(22) Date de dépôt: 26.06.1989
(51) Int. Cl.: F27B 14/14, C03B 5/02

(54) **Procédé et installation de fusion par micro-ondes d'un matériau corrosif à chaud**
Verfahren und Anlage zum Schmelzen eines ätzenden Materials mit Mikrowellen bei hohen Temperaturen
Process and installation for the microwave melting of a material corrosive at an elevated temperature

(30) Priorité: 27.06.1988 FR 8808601
(43) Date de publication de la demande: 03.01.1990
(73) Titulaire: COMMISSARIAT A L'ENERGIE ATOMIQUE, 75015 Paris Cédex 15 (FR)
(72) Inventeur: Boen, Roger, F-30130 Point Saint Esprit (FR); Bousquet, Francis, F-30630 Goudargues (FR); Hery, Yves, F-92290 Chatenay Malabry (FR); Moncouyoux, F-30200 Bagnols sur Cèze (FR)
(74) Mandataire: Mongrédien, André

(56) Documents cités:
- EP-A- 0 176 898
- FR-A- 785 564
- FR-A- 1 097 170
- FR-A- 1 361 261
- FR-A- 2 454 597
- US-A- 4 174 462

## Description

De nombreux matériaux très corrosifs ou à très haut point de fusion tels que par exemple les oxydes, les verres ou certains métaux, ne peuvent pas être fondus ou élaborés dans des creusets chauds conventionnels en réfractaire car ils corrodent rapidement ce réfractaire. Cette corrosion conduit tout d'abord à une pollution du matériau par le réfractaire puis à un percement du creuset. Pour obtenir ces matériaux à un haut degré de pureté, on les fait fondre dans un creuset en métal refroidi. Au contact du métal froid formant la paroi du creuset, une mince couche de matériau solidifié se forme. Cette couche sépare le matériau fondu de la paroi du creuset, ce qui évite à la fois l'attaque du creuset et la pollution du matériau fondu.

Il est également connu d'utiliser un procédé de chauffage par induction directe pour fondre le matériau. Dans ce but, le creuset est constitué de secteurs en métal juxtaposés de façon à former un cylindre et posés sur une sole qui peut être réalisée en réfractaire ou en métal. Dans ce dernier cas, la sole doit être refroidie par une circulation d'eau. Les secteurs sont séparés par une mince couche d'isolant électrique. Grâce à cette segmentation du creuset, on modifie la circulation des courants induits dans ses parois de telle sorte que le creuset est en partie transparent aux champs électromagnétiques créés par l'inducteur placé autour du creuset.

Le principal problème rencontré lors de la fusion ou de l'élaboration en creuset froid de matériaux isolants à froid est le démarrage de la chauffe. En effet, le matériau froid ne permet généralement pas la circulation de courants induits et ne peut donc être chauffé par induction. Le démarrage de la chauffe doit donc se faire à l'aide d'un dispositif annexe qui amène le matériau à fondre ou à élaborer à une température suffisante pour permettre la circulation de courants induits à la fréquence d'alimentation de l'inducteur (voir par exemple EP-A-0176898).

Dans un premier cas, il est connu de préchauffer un matériau isolant à froid au moyen d'un dispositif de préchauffage tel qu'un brûleur à gaz ou une voûte chauffante. Toutefois, le transfert de chaleur par conduction ou rayonnement du brûleur ou de la voûte jusqu'au matériau est difficile, particulièrement lorsqu'il faut porter ce matériau à une haute température pour permettre la circulation des courants induits.

Il est également connu de placer dans le matériau à fondre une virole en graphite ou en métal. Cette virole est chauffée par induction à l'aide d'un inducteur à haute fréquence. Elle chauffe alors par conduction le matériau jusqu'à la température désirée. Toutefois, cette virole doit être ensuite sortie du bain fondu, ce qui est une opération très délicate. D'autre part, lors de la phase de démarrage, elle peut réagir chimiquement avec le matériau à fondre, par exemple par réduction des oxydes par le graphite.

Il est également connu d'ajouter dans le matériau à fondre un métal pouvant être chauffé par induction et réagissant ensuite pour former l'un des composants du matériau à élaborer. A titre d'exemple, on peut ajouter de la poudre d'aluminium, métal suffisamment conducteur à froid pour pouvoir être chauffé par induction, dans des verres contenant de l'alumine. Toutefois, dans ce cas, il est difficile de contrôler le préchauffage. Ce dernier peut être très violent et endommager le creuset métallique par la formation d'arcs électriques.

Selon une autre application des creusets froids, on peut élaborer des métaux par réduction directe de leurs oxydes, de leur fluorures, etc., par des réducteurs tels que Ca, Al, Mg. On introduit par conséquent dans le creuset un mélange de produits primaires d'une réaction chimique de réduction qui conduit à l'élaboration d'un métal ou d'un alliage métallique. Le métal formé par la réaction se rassemble au fond du creuset froid et est maintenu en fusion par chauffage par induction en moyenne fréquence, c'est-àdire une fréquence comprise entre 1 et 10 kHz. Ce métal peut être tiré en continu vers le bas sous la forme d'un lingot solidifié en-dessous de l'inducteur moyenne fréquence. Le laitier formé par les produits de départ de la réaction ainsi que par les produits secondaires surnageant à la surface du bain de métal fondu doit être mis en fusion lors du démarrage et maintenu fondu lors du déroulement de la réaction d'élaboration. Les solutions à ce problème sont les mêmes que dans le premier cas, à savoir l'utilisation d'un dispositif de préchauffage tel qu'un brûleur à gaz ou une voûte chauffante, l'utilisation d'une virole réalisée en un matériau conducteur ou encore l'addition dans le matériau à fondre d'un métal pouvant être chauffé par induction et réagissant pour former ensuite un des composants du matériau à fondre. Les inconvénients de ces diverses techniques ont déjà été énumérés précédemment et ne seront donc par répétés.

Une fois le laitier porté à une température suffisante pour permettre la circulation des courants induits, il peut être maintenu en fusion par chauffage par induction au moyen d'un inducteur à haute fréquence (supérieure à 100 kHz) placé au-dessus de l'inducteur de moyenne fréquence qui chauffe le métal. Toutefois, cette solution est délicate à mettre en oeuvre parce qu'il est nécessaire d'alimenter l'inducteur à haute fréquence sous une tension élevée par une ligne d'amenée de courant dont la longueur est limitée par la chute de tension qu'elle engendre. La présence d'une haute tension à fréquence élevée peut être la cause d'arcs entre les spires de l'inducteur ou entre l'inducteur et le creuset métallique.

La présente invention a précisément pour objet un procédé et une installation de fusion d'un métal corrosif à chaud qui remédient à tous ces inconvénients.

De manière plus précise, l'invention concerne un procédé de fusion d'un matériau corrosif à chaud dans un creuset métallique refroidi par un fluide caloporteur, ledit procédé comportant les étapes successives suivantes :
- introduction du matériau à fondre dans le creuset,
- préchauffage de ce matériau jusqu'à une température voulue,
- chauffage du matériau jusqu'à une température de fusion, au moyen d'un inducteur à moyenne fréquence, ladite température voulue étant suffisante pour permettre la circulation des courants induits par ledit inducteur, caractérisé en ce que le préchauffage du matériau est effectué au moyen d'un champ de micro-ondes.

Dans certains cas défavorables où le produit à préchauffer n'est pas sensible aux micro-ondes lorsqu'il est froid, on peut alors, selon l'invention, lui ajouter un additif sensible aux micro-ondes qui s'échauffe dans le champ micro-ondes, et ensuite communique sa chaleur à tout le matériau, le rendant ainsi sensible aux micro-ondes.

D'autres caractéristiques et avantages de la présente invention apparaîtront encore à la lecture de la description qui suit d'un exemple de réalisation donné à titre illustratif et nullement limitatif, en référence aux dessins annexés sur lesquels :
- la figure 1 est une vue en coupe d'une installation de fusion par induction avec préchauffage par micro-ondes d'un matériau corrosif conforme à l'invention,
- la figure 2 est une vue en coupe d'une installation conforme à l'invention de fusion par micro-ondes d'un mélange de produits primaires et secondaires d'une réaction chimique de réduction.

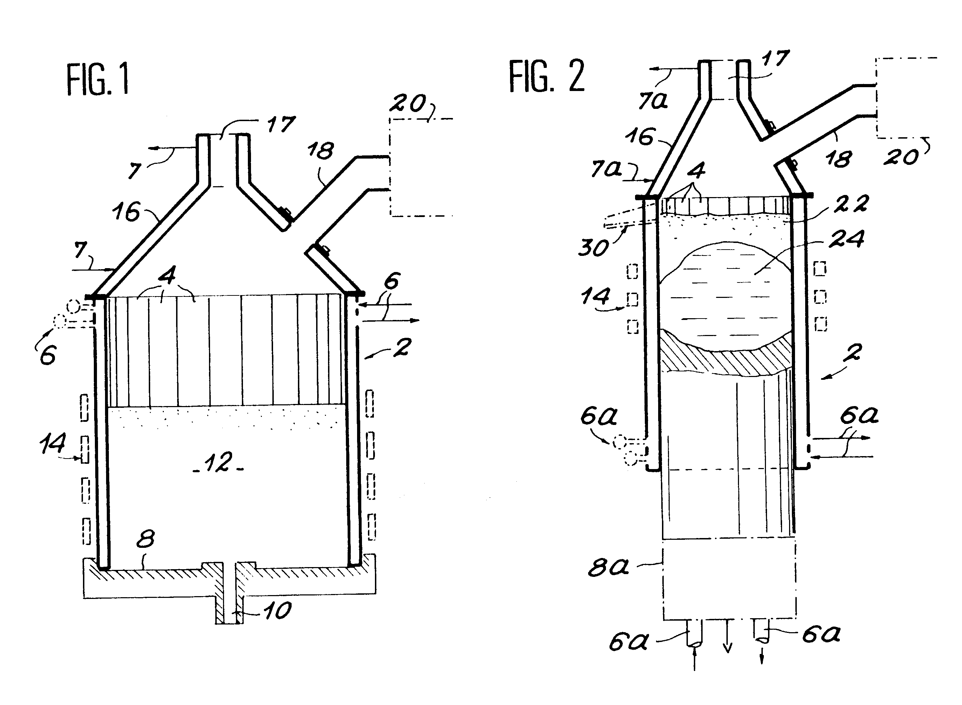

On a représenté sur la figure 1 une installation conforme à l'invention, permettant le préchauffage par micro-ondes. Cette installation est constituée d'un creuset métallique 2 constitué de segments 4 formant un cylindre. Ces segments 4 sont séparés par une mince couche d'isolant électrique afin d'assurer la transparence du creuset au champ électromagnétique créé par l'inducteur 14. Le creuset 2 est refroidi par une circulation 6 d'un fluide caloporteur, de préférence de l'eau, qui permet d'éviter un échauffement excessif du métal et par conséquent sa fusion. Au contact de la paroi froide se forme une mince couche de matériau solidifié qui protège le creuset d'une attaque chimique. La partie inférieure du creuset est fermée par une sole 8 qui peut être réalisée en un matériau réfractaire comme dans l'exemple de réalisation représenté. Toutefois, cette sole 8 pourrait également être constituée d'un métal. Dans ce cas, elle serait également refroidie par la circulation d'un fluide caloporteur, de manière identique à la cuve. Au centre de la sole réfractaire 8, on trouve une buse de coulée 10 réalisée en un matériau réfractaire, par exemple de la céramique, qui permet le soutirage par le bas du matériau fondu 12 contenu dans le creuset. Autour du creuset 2 est disposé un inducteur 14. Dans l'exemple de réalisation décrit, l'inducteur 14 fonctionne à une fréquence comprise par exemple entre 1 kHz et 1 MHz.

Au-dessus du creuset 2, on a disposé un applicateur de micro-ondes. Cet applicateur est constitué par un cône 16 refroidi par une circulation d'un fluide caloporteur, par un guide d'onde 18 débouchant dans la paroi du cône 16 et raccordé à un générateur de micro-ondes 20. Le cône 16 surmontant le creuset 2 est refroidi par une circulation d'eau 7. Il empêche les micro-ondes de s'échapper vers le haut. Le creuset métallique froid confine ces ondes vers le bas. A la partie supérieure du cône 16 se trouve une ouverture 17 qui permet d'introduire le matériau à fondre ou à élaborer. La fréquence des micro-ondes est, dans l'exemple de réalisation décrit, de 915 MHz ou 2450 MHz. Les dimensions, notamment la longueur et la section du guide d'ondes, sont adaptées à la fréquence des micro-ondes.

Cette installation permet de préchauffer par un champ de micro-ondes de nombreux matériaux avant ou pendant leur fusion dans le creuset froid sectorisé. Dans l'exemple décrit, l'inducteur 14 permet de chauffer par induction directe la charge 12 contenue dans le creuset.

Si le matériau n'est pas sensible aux micro-ondes, comme le verre de produit de fission par exemple, on peut lui adjoindre un verre de composition compatible. Sa composition peut être par exemple : SiO₂ à 40%, Fe₂O₃ à 21,7%, CaO à 20,3%, Al₂O₃ à 8,2%, MnO₂ à 5,3%, ZnO à 1,5%, Na₂O à 1,35%, MgO à 1,25% et B₂O₃ à 0,4%. En outre, il doit être ajouté en faible quantité (quelques pour cent). Ce produit ne réagit pas avec le verre de produit de fission. Il est sensible aux micro-ondes, probablement en raison de sa forte teneur en oxyde de fer, et tout autre produit à forte teneur en oxyde de fer aurait le même comportement. Il peut être mélangé au verre ou ajouté par-dessus. Il s'échauffe dans le champ micro-ondes et transmet au matériau à préchauffer sa chaleur, le rendant ainsi sensible aux micro-ondes.

Cette installation présente de nombreux avantages par rapport aux solutions classiques décrites antérieurement. Dans le cas du préchauffage avant fusion par induction directe de matériaux isolants à froid, la chaleur est apportée directement dans la masse du matériau. Il n'y a donc pas de problème de transfert de chaleur par conduction ou rayonnement comme dans le cas des brûleurs à gaz ou des voûtes chauffantes. En conséquence, le rendement énergétique est bien meilleur. D'autre part, il n'y a pas de dégagement de grands volumes de gaz difficiles à traiter. D'autre part, ce préchauffage est propre puisqu'il n'y a pas de réaction chimique avec le matériau à fondre comme dans le cas du préchauffage utilisant des viroles de graphite ou de métal. On élimine ainsi toute pollution du matériau à fondre.

On a représenté sur la figure 2 une installation de préchauffage ou de chauffage d'un matériau corrosif à chaud conforme à l'invention adapté au cas où la charge à fondre est constituée par un mélange de produits primaires et secondaires d'une réaction chimique de réduction conduisant à l'élaboration d'un métal ou d'un alliage métallique. Comme on l'a expliqué précédemment, un laitier 22 surnage à la surface du métal liquide fondu 24. Le laitier 22 doit être mis en fusion lors du démarrage de l'installation et maintenu fondu lors du déroulement de la réaction d'élaboration.

En-dessous du métal élaboré fondu, on trouve une masse de métal élaboré figée. Dans cet exemple de réalisation, le creuset segmenté 2 composé des segments 4 est fermé à sa partie inférieure par une sole 8a refroidie par une circulation d'un fluide caloporteur 6a, de préférence de l'eau.

De manière identique à l'exemple de réalisation décrit sur la figure 1, l'installation comporte des moyens permettant d'engendrer un champ de micro-ondes. Ces moyens sont constitués par un applicateur de micro-ondes comprenant un cône 16, refroidi par une circulation 7a, un générateur de micro-ondes 20 et un guide d'ondes 18 et, éventuellement un dispositif d'adaptation (réflecteur par exemple) permettant de concentrer le champ micro-ondes sur le laitier 22. Le champ de micro-ondes produit par le générateur 20 permet de préchauffer le laitier 22 et de le maintenir fondu pendant la suite de la réaction. Le métal élaboré est ensuite maintenu en fusion par l'inducteur à moyenne fréquence 14 fonctionnant par exemple à 10 kHz.

Les avantages de cette installation sont les suivants : les produits réactionnels de départ peuvent être chauffés par micro-ondes lorsqu'ils sont froids, ce qui résout le problème du préchauffage en évitant les inconvénients des dispositifs antérieurs et en particulier en éliminant toute pollution du métal.

Lorsque la réaction de réduction est en cours, le maintien en fusion du laitier 22 au moyen du champ de micro-ondes engendré par le générateur 20 est beaucoup plus simple que l'utilisation d'un dispositif de chauffage par induction à haute fréquence tel qu'on l'utilise de manière classique. En effet, le chauffage par induction à haute fréquence nécessite la présence d'un inducteur alimenté sous une tension élevée par une ligne d'amenée de courant dont la longueur est limitée par la chute de tension qu'elle engendre. La présence d'une haute tension à fréquence élevée peut être la cause d'arcs entre les spires de l'inducteur ou entre l'inducteur et le creuset métallique 2. Dans le cas d'une installation conforme à l'invention, les risques d'arcs sont évités étant donné que le guide d'ondes 18 présente une longueur suffisante pour que le générateur 20 se trouve à distance de l'inducteur 14 et du creuset 2.

De plus, l'utilisation d'un chauffage par micro-ondes du laitier 22 facilite la mise en place d'une goulotte de débordement 30 permettant l'évacuation en continu du laitier formé lors de la réaction. En effet, dans ce cas, l'implantation d'une goulotte n'est pas gênée par la proximité d'un inducteur à haute fréquence, tel qu'on le rencontre dans l'art antérieur.

## Revendications

1. Procédé de fusion d'un matériau corrosif à chaud dans un creuset métallique (2) refroidi par un fluide caloporteur (6, 6a), ledit procédé comportant les étapes successives suivantes :
- introduction du matériau à fondre (12) dans le creuset ;
- préchauffage de ce matériau (12) jusqu'à une température voulue ;
- chauffage du matériau (12) jusqu'à une température de fusion, au moyen d'un inducteur (14) à moyenne fréquence, ladite température voulue étant suffisante pour permettre la circulation des courants induits par ledit inducteur (14),
caractérisé en ce que le préchauffage du matériau est effectué au moyen d'un champ de micro-ondes (20).

2. Procédé selon la revendication 1, caractérisé en ce qu'il consiste à ajouter dans le matériau corrosif un additif sensible aux micro-ondes permettant de préchauffer le matériau corrosif s'il n'est pas sensible aux micro-ondes.

3. Procédé selon la revendication 1 ou 2, caractérisé en ce que le matériau corrosif (12) est un mélange de produits primaires et secondaires d'une réaction chimique de réduction conduisant à l'élaboration d'un métal ou d'un alliage métallique.

4. Installation de fusion pour fondre un matériau corrosif, comportant un creuset métallique (2) pour recevoir ledit matériau corrosif, un inducteur (14) entourant le creuset métallique (2) pour échauffer le matériau corrosif (12) par induction directe, et une circulation de fluide caloporteur (6, 6a) pour assurer le refroidissement dudit creuset métallique (2), caractérisée en ce qu'elle comporte un moyen de préchauffage par micro-ondes (16, 18, 20) du matériau corrosif.

5. Installation selon la revendication 4, caractérisée en ce que les moyens de préchauffage par micro-ondes du matériau corrosif sont constitués par un applicateur de micro-ondes (16) surmontant le creuset métallique, par un générateur de micro-ondes (20) et par un guide d'ondes (18) reliant le générateur (20) à l'applicateur de micro-ondes (16), une circulation (7) d'un fluide caloporteur étant prévue pour refroidir ledit applicateur de micro-ondes (16).

## Claims

1. Process for the hot melting of a corrosive material in a metal crucible (2) cooled by a heat transfer liquid (6, 6a), the process comprising the following successive stages:
- the introduction of the material (12) for melting into the crucible,
- the preheating of the material (12) to a desired temperature,
- the heating of the material (12) to a melting temperature by means of a medium frequency inductor (14), said desired temperature being adequate to permit the flow of currents induced by said inductor (14),
characterized in that the preheating of the material is performed by means of a microwave field (20).

2. Process according to claim 1, characterized in that it consists of adding to the corrosive material an additive which is sensitive to the microwaves making it possible to preheat the corrosive material if it is not sensitive to the microwaves.

3. Process according to claim 1 or 2, characterized in that the corrosive material (12) is a mixture of primary and secondary products of a chemical reducing reaction leading to the production of a metal or a metal alloy.

4. Melting installation for melting a corrosive material, incorporating a metal crucible (2) for receiving said corrosive material, an inductor (14) surrounding the metal crucible (2) for heating the corrosive material (12) by direct induction and a heat transfer fluid circulation (6, 6a) in order to ensure the cooling of said metal crucible (2), characterized in that it has a means (16, 18, 20) for the microwave preheating of said corrosive material.

5. Installation according to claim 4, characterized in that the means for the microwave preheating of the corrosive material are constituted by a microwave applicator (16) surmounting the metal crucible, by a microwave generator (20) and by a waveguide (18) connecting the generator (20) to the microwave applicator (16), a heat transfer fluid flow (7) being provided for cooling said microwave applicator (16).

## Patentansprüche

1. Verfahren zum Schmelzen eines in der Hitze korrosiven Materials in einem metallischen Tiegel (2), der durch ein Wärmeübertragungsfluid (6, 6a) gekühlt ist, wobei das Verfahren die folgenden nacheinander erfolgenden Schritte umfaßt:
- Einbringen des zu schmelzenden Materials (12) in den Tiegel;
- Vorheizen des Materials (12) bis auf eine gewünschte Temperatur;
- Heizen des Materials (12) bis auf eine Schmelztemperatur mittels eines Induktors mittlerer Frequenz (14), wobei die gewünschte Temperatur ausreichend ist, um das Fließen der durch den Induktor (14) induzierten Ströme zu ermöglichen,
**dadurch gekennzeichnet**, daß das Vorheizen des Materials mittels eines Mikrowellenfeldes (20) bewirkt wird.

2. Verfahren nach Anspruch 1, **dadurch gekennzeichnet**, daß es das Zugeben von einem für Mikrowellen empfänglichen Additiv zu dem korrosiven Material beinhaltet, welches das Vorheizen des korrosiven Materials ermöglicht, wenn es nicht für Mikrowellen empfänglich ist.

3. Verfahren nach Anspruch 1 oder 2, **dadurch gekennzeichnet**, daß das korrosive Material (12) ein Gemisch aus Primär- und Sekundärprodukten einer chemischen Reduktionsreaktion ist, die zur Herstellung eines Metalls oder einer metallischen Legierung führt.

4. Schmelzvorrichtung zum Schmelzen eines korrosiven Materials, umfassend einen metallischen Tiegel (2) zum Aufnehmen des korrosiven Materials, einen den metallischen Tiegel (2) umgebenden Induktor (14) zum Erhitzen des korrosiven Materials (12) durch direkte Induktion, und einen Kreislauf eines Wärmeübertragungsfluids (6, 6a), um die Kühlung des metallischen Tiegels (2) zu gewährleisten, **dadurch gekennzeichnet**, daß sie ein Mittel zum Vorheizen des korrosiven Materials durch Mikrowellen (16, 18, 20) umfaßt.

5. Vorrichtung nach Anspruch 4, **dadurch gekennzeichnet**, daß die Mittel zum Vorheizen des korrosiven Materials durch Mikrowellen aus einem Mikrowellenapplikator (16), der über dem metallischen Tiegel sich befindet, aus einem Mikrowellengenerator (20) und aus einem Wellenleiter (18), welcher den Mikrowellengenerator (20) mit dem Mikrowellenapplikator (16) verbindet, zusammengesetzt sind, wobei ein Kreislauf (7) eines Wärmeübertragungsfluids zum Kühlen des Mikrowellenapplikators (16) vorgesehen ist.
